Europäisches Patentamt

European Patent Office

Office européen des brevets

(11) Veröffentlichungsnummer: **0 225 450 B1**

(12) **EUROPÄISCHE PATENTSCHRIFT**

(45) Veröffentlichungstag der Patentschrift: **22.01.92**

(21) Anmeldenummer: **86114099.4**

(22) Anmeldetag: **11.10.86**

(51) Int. Cl.⁵: **C01B 25/445**

(54) **Verfahren zur Herstellung von Madrellschem Salz.**

(30) Priorität: **07.12.85 DE 3543394**

(43) Veröffentlichungstag der Anmeldung:
**16.06.87 Patentblatt 87/25**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
**DD-A- 136 954**
**DE-C- 2 515 370**

(73) Patentinhaber: **BK Ladenburg GmbH Gesellschaft für chemische Erzeugnisse
Dr.-Albert-Reimann-Strasse 2
W-6802 Ladenburg(DE)**

(72) Erfinder: **Kleemann, Stephan, Dr.
Mozartstrasse 25
W-6905 Schriesheim(DE)**
Erfinder: **Maurer, Alexander, Dr.
Kochelseeweg 1
W-6800 Mannheim 81(DE)**
Erfinder: **Erasmus, Albert, Dr.
Mitrasweg 3
W-6802 Ladenburg(DE)**
Erfinder: **Spatz, Wilhelm
Talstrasse 125
W-6101 Reichelsheim(DE)**

(74) Vertreter: **Grussdorf, Jürgen, Dr.
Patentanwälte Zellentin & Partner Rubensstrasse 30
W-6700 Ludwigshafen(DE)**

**Beschreibung**

Gegenstand der vorliegenden Erfindung ist ein Verfahren zur Herstellung von Maddrellschem Salz durch Kondensation von Natriumdihydrogenphosphat und/oder Dinatriumdihydrogenpyrophosphat bei 250-500°C.

Die bevorzugte Verwendung von Maddrellschem Salz erfolgt als Putzkörper in Zahnpasten. Aufgrund dieses Einsatzes wird ein möglichst geringer Anteil an wasserlöslichen Bestandteilen, vorwiegend saurem Natriumpyrophosphat, Trimetaphosphat und lösliche Polyphosphate gefordert. Der Anteil an wasserlöslichen Nebenprodukten bei der üblichen Herstellung des Maddrellschen Salzes durch thermische Kondensation von Mono-natriumorthophosphat ist sehr stark von der Reaktionsführung, besonders von der Temperaturführung, abhängig und liegt im allgemeinen bei ca. 5 %.

Ziel der vorliegenden Erfindung war es, ein neues Verfahren zur schnelleren Bildung von Maddrellschem Salz, bei gleichzeitiger weiterer Verbesserung der Qualität, zu finden.

Die Kenntnisse über Maddrellsches Salz sind aufgrund seiner Bedeutung relativ groß und es sind inzwischen mehrere Verfahren zu seiner Herstellung bekannt.

Nach F. Thilo und R. Rätz, Z. anorg. allg. Chem.,258, S. 53 (1949), wird Maddrellsches Salz durch tagelanges Tempern von Mono-natriumdihydrogenphosphat bei 350°C hergestellt und durch Auswaschen mit Wasser von noch in reichlichem Maße vorhandenen wasserlöslichen Nebenprodukten befreit.

Auch D. E. Corbridge und F. R. Tromans beschreiben in Analytical Chemistry, 30, S. 1101-1110 (1958), die Bildung von Maddrellschem Salz durch tagelanges Erhitzen von Mono-natriumorthophosphat auf 380°C und anschließendem Waschen des getemperten Produkts mit Wasser.

Die DE-B-16 67 569 beschreibt ein Verfahren zur Herstellung von Maddrellschem Salz aus Natriumdihydrogenphosphat durch Erhitzen auf 450°C. Dabei wird der bei der Kondensation entstehende Wasserdampf bei Wasserdampf-Partialdrücken zwischen 0,067 und 0,6 Torr entfernt.

Nach der DE-C-21 61 600 wird Maddrellsches Salz durch Kondensation von Mono-natriumorthophosphat bei Temperaturen zwischen 300 und 380°C in Gegenwart von Wasserdampf erhalten, wobei die Kondensation in einer gesättigten Wasserdampf-Atmosphäre durchgeführt werden muß.

Aus J. R. Van Wazer, "Phosphorus and its compounds", Vol. I, S. 668, ist bekannt, daß bei der Kondensation von Mono-natriumorthophosphat zu Maddrellschem Salz bei 400°C Wasserdampf durch die Abspaltung des Konstitutionswassers auftritt, welcher sich unter Umständen negativ auf die Bildung des Maddrellschen Salzes auswirken kann.

Die US-A-23 56 799 beschreibt ein Verfahren zur Herstellung von Maddrellschem Salz, welches einen wasserlöslichen Anteil von ca. 4 % aufweist. Dabei wird Mono-natriumorthophosphat in einer ersten Verfahrensstufe in Pellets überführt, welche dann durch Erhitzen auf Temperaturen von 300-460°C zu Maddrellschem Salz umgesetzt werden. Diese Verfahrensweise ist umständlich und aufgrund des zusätzlichen Pelletierens auch kostenintensiv.

Bei der Nacharbeitung des Verfahrens (J. Am. Chem. Soc.,81 (1959) 79), wurde gefunden, daß weder durch Pelletieren noch durch feinstes Vermahlen des Mono-natriumorthophosphats oder durch besonders lange thermische Behandlung der wasserlösliche Anteil des Endproduktes unter 5 %, bezogen auf Substanz, herabgesetzt werden kann.

In der DL-C 137 753 ist beschrieben, daß man Madrellsalze mit unter 2 % Metaphosphatgehalt herstellen kann, wenn man mindestens 2 Teile pulverförmiges Madrellsalz mit höchstens einem Teil Natriumorthophosphat vermischt und die Mischung mit einer Aufheizgeschwindigkeit von über 50°C pro Minute auf 300 - 400°C erhitzt und tempert. Bei diesem Verfahren wird nur 1/3 Ausbeute erhalten und ein hoher Steuerungsaufwand benötigt.

In der DL-C 142 959 ist ferner beschrieben, daß Madrellsalze gebildet wird, wenn Mononatriumorthophosphat mit mindestens 15 % amorphem Dinatriumdiphophat zusammen getempert wird.

In der DE-C 25 15 370 wird ein Verfahren zur Herstellung Von Maddrellschem Salz durch Erhitzen Von Mono-natriumorthophosphat bzw. Dinatriumpyrophosphat bei Temperaturen von 250-450°C beschrieben. Hierbei wird eine Reaktionsbeschleunigung durch die Beimischung stickstoffhaltiger Basen in katalytischen Mengen erzielt. Die stickstoffhaltige Base wird üblicherweise als feinverteiltes Pulver in Form der entsprechenden phosphorsauren Salze zugefügt. In Ausnahmefällen, d.h. nur wenn diese Salze nicht temperaturempfindlich sind, können sie dem Natriumphosphat auch vor dem Versprühen zugesetzt werden. Dabei wird von dem z.B. in der DE-A 17 92 703 beschriebenen Verfahren zur Herstellung von kettenförmig kondensierten Ammoniumphosphaten ausgegangen, deren Bildungsgeschwindigkeit sich durch einen über das stoechiometrisch notwendige Verhältnis hinausgehenden Zusatz der Base beschleunigen läßt.

Nach all diesen Verfahren entsteht ein Maddrellsches Salz, welches neben etwa 5-10 % mit Wasser auswaschbarer Nebenprodukte noch im Inneren der Kristalle lösliche Produkte eingeschlossen enthält, die auch durch gründliches Auswaschen nicht oder nur umständlich abgetrennt werden können.

Es stellt sich daher die Aufgabe, ein neues Verfahren zu finden, wonach einfach und wirtschaftlich Maddrellsches Salz hergestellt werden kann, welches keine oder nur noch sehr wenige wasserlösliche Bestandteile enthält.

Überraschenderweise wurde nun gefunden, daß sich Maddrellsches Salz aus festem Natriumdihydrogenphosphat und/oder Dinatriumdihydrogenpyrophosphat, welches katalytische Mengen einer Säure statistisch verteilt im Kristallgitter enthält, durch Erhitzen auf Temperaturen von 250-500 °C vollständiger und in reiner Form bildet, wobei zusätzlich die Reaktion gegenüber den vorbekannten Verfahren um das 2- bis 3fache schneller abläuft.

Als Säure eignet sich besonders Orthophosphorsäure, Polyphosphorsäure, phosphorige Säure oder hypophosphorige Säure, welche bei der thermischen Kondensation nicht verdampfen und die spätere Verwendung als Putzkörper nicht beeinträchtigen.

Die Säure wird in Mengen von 0,05-10, vorzugsweise 0,5-5 Mol% bezogen auf den Feststoff zugemischt.

Die Herstellung der festen Ausgangsprodukte erfolgt am günstigsten aus einer gemeinsamen Lösung des Natriumdihydrogenphosphats und/oder Dinatriumdihydrogenpyrophosphats und der Säure, wobei das Natriumsalz auch in situ durch Neutralisation der Säure hergestellt sein kann, entweder durch gemeinsame Kristallisation oder dem Fachmann an sich bekannte Methoden der Einengung, wie beispielsweise durch Sprühtrocknung, Trocknung im Drehrohr, Kneter oder in Mischaggregaten, vorzugsweise im Vakuum. Dieser Auswahl kommt jedoch nur exemplarische Bedeutung zu.

Die Umsetzung der Ausgangsprodukte zum Maddrellschen Salz erfolgt durch Erhitzen auf Temperaturen von 250-500 °C, vorzugsweise auf 280-380 °C. Als Vorrichtung kann entweder eine Wirbelschicht, ein Drehrohrofen oder ein heizbarer Kneter verwendet werden. Soweit diese Vorrichtung auch zur Herstellung des Ausgangsproduktes aus einer entsprechenden Lösung gedient hat, können beide Verfahren auch direkt nacheinander durchgeführt werden. Während es jedoch zur gründlichen Trocknung des Ausgangsproduktes vorteilhafter ist, bei vermindertem Druck zu arbeiten, beispielsweise 0,067 - 0,6 Bar (67 - 600 h Pa, 50 bis 450 Torr), vorzugsweise 0,13 - 0,4 Bar (100-300 Torr), führt der reduzierte Druck bei der anschließenden Temperung zum Maddrellschen Salz, aufgrund des Mitreißens pulverförmiger Produkte leicht zu unerwünschten, technischen Problemen und sollte deshalb entfernt werden.

Die folgenden Beispiele sollen den Vorteil des erfindungsgemäßen Verfahrens gegenüber bekannten Verfahren erläutern.

Die Beispiele geben jeweils die Menge der verschiedenen Komponenten wieder, die zur Herstellung des Ausgangsprodukts eingesetzt wurden. Die Phosphorsäure wurde als 50 %ige Lösung in Wasser, die Natronlauge als 40 %ige Lösung eingesetzt. Die Trocknung erfolgte im Rotationsverdampfer bei einem Druck von ca. 0,067 Bar (50 Torr).

Alle Reaktionen wurden im ölbeheizten Kneter durchgeführt. Die Öltemperatur betrug 330 °C (± 1 °C), die Produkttemperatur betrug ca. 290 °C.

In allen Beispielen wurde das trockene Ausgangsmaterial in dem bereits auf 150 °C vorgeheizten Kneter innerhalb von ca. 75 Minuten auf die Endtemperatur von 330 °C (Öltemperatur) erwärmt und anschließend bis zur beginnenden Aspiration von Feststoff bei einem Wasserdampfpartialdruck von ca. 200 Torr geknetet.

Die prozentualen Angaben beziehen sich auf Mol-%, die angegebenen Zeiten beziehen sich in allen Fällen, auf den Zeitpunkt des Erreichens von 330 °C Ölbadtemperatur.

Die Ausbeuten an Maddrellschem Salz wurden durch gravimetrische Doppel-Bestimmungen des wasserunlöslichen Anteils ermittelt.

Es zeigt sich deutlich, daß erdindunsgemäß das Maddrellsche Salz schneller und vollständiger gebildet wird.

## Beispiel 1

100 % $H_3PO_4$ + 99 % NaOH

Die Phosphorsäure wurde mit der entsprechenden Menge an NaOH neutralisiert und anschließend einrotiert.

| Zeit (h) | 0,5 | 1 | 2 | 3 | 4 | 5 | 6 | 7 |
|---|---|---|---|---|---|---|---|---|
| Ausbeute (%) | 11,1 | 18,4 | 27,9 | 41,0 | 56,6 | 75,5 | 89,2 | 95,5 |

**Beispiel 2**

$NaH_2PO_4$ + 1,5 % $H_3PO_4$

Das Natriumdihydrogenphosphat (vgl. Beispiel 3) wurde in Wasser gelöst, mit der entsprechenden Menge an PhosphorSäure versetzt und anschließend einrotiert.

| Zeit (h) | 0,5 | 1 | 2 | 3 | 4 | 5 | 6 | 7 |
|---|---|---|---|---|---|---|---|---|
| Ausbeute (%) | 8,1 | 20,8 | 50,5 | 74,3 | 85,8 | 94,3 | 95,1 | 97,4 |

**Beispiel 3**

100 % $H_3PO_4$ + 100 % $NaOH$ ($NaH_2PO_4$ als Kontrollversuch)

Die Phosphorsäure wurde mit der entsprechenden Menge $NaOH$ neutralisiert und zu $NaH_2PO_4$ einrotiert.

| Zeit (h) | 0,5 | 1 | 2 | 3 | 4 | 5 | 6 | 7 |
|---|---|---|---|---|---|---|---|---|
| Ausbeute (%) | 0,5 | 0,6 | 0,6 | 0,7 | 0,8 | 0,9 | 1,0 | 1,0 |

**Beispiel 4**

$NaH_2PO_4$ + 1,5 % $NH_4H_2PO_4$ (Vergleichsbeispiel gemäß DE-C 25 15 370)

Das trockene Natriumdihydrogenphosphat gemäß Beispiel 3 wurde mit der entsprechenden Menge an festem, pulverisiertem Monoammonphosphat versetzt und intensiv vermischt.

| Zeit (h) | 0,5 | 1 | 2 | 3 | 4 | 5 | 6 | 7 |
|---|---|---|---|---|---|---|---|---|
| Ausbeute (%) | 0,2 | 1,3 | 6,2 | 26,3 | 49,9 | 61,3 | 71,5 | 74,6 |

**Patentansprüche**

1. Verfahren zur Herstellung von Maddrellschem Salz, dadurch gekennzeichnet, daß man festes Natriumdihydrogenphosphat und/oder Dinatriumdihydrogenpyrophosphat, welches katalytische Mengen Orthophosphorsäure, Polyphosphorsäure, phosphorige Säure oder hypophosphorige Säure statistisch verteilt enthält, bei einer Temperatur von 250-500 °C zur Kondensation bringt.

2. Verfahren gemäß Anspruch 1, **dadurch gekennzeichnet,** daß die statistische Verteilung durch Eindampfen, Sprühtrocknen oder Auskristallisieren einer gemeinsamen Lösung der Komponenten erhalten wird.

3. Verfahren gemäß einem der Ansprüche 1 - 2, **dadurch gekennzeichnet,** daß die Reaktion bei Temperaturen von 280-380 °C durchgeführt wird.

4. Verfahren gemäß einem der Ansprüche 1 - 3, **dadurch gekennzeichnet,** daß die Kondensation bis zum Erreichen eines trockenen Feststoffes bei Wasserdampfpartialdrucken von 0,067 - 0,6 Bar (50-450 Torr) durchgeführt wird.

5. Verfahren gemäß einem der Ansprüche 1 - 4, **dadurch gekennzeichnet,** daß die Säure 0,05 - 10 Mol-%, vorzugsweise 0,5-5 Mol-% bezogen auf die Gesamtmenge, ausmacht.

6. Natriumdihydrogenphosphat, enthaltend 0,05-2,5 Mol-% Orthophosphorsäure statistisch verteilt im Kristallgitter.

## Claims

1. Process for the production of Maddrell's salt, characterised in that one brings solid sodium dihydrogen phosphate and/or disodium dihydrogen pyrophosphate, which contains catalytic amounts of orthophosphoric acid, polyphosphoric acid, phosphorous acid or hypophosphorous acid statistically distributed, to condensation at a temperature of 250 - 500 °C.

2. Process according to claim 1, characterised in that the statistic distribution is achieved by evaporation, spray drying or crystallising out of a common solution of the components.

3. Process according to one of claims 1 - 2, characterised in that the reaction is carried out at temperatures of 280 - 380 °C.

4. Process according to one of claims 1 - 3, characterised in that the condensation is carried out, up to the achievement of a dry solid material, at a water, vapour partial pressure of 0.067 - 0.6 bar (50 - 450 Torr).

5. Process according to one of claims 1 - 4, characterised in that the acid constitutes from 0.05 - 10 mol %, preferably 0.5 - 5 mol %, referred to the total amount.

6. Sodium dihydrogen phosphate containing 0.05 - 2.5 mol % of orthophosphoric acid statistically distributed in the crystal lattice.

## Revendications

1. Procédé de préparation de sel de Maddrell, caractérisé en ce qu'on fait condenser à une température de 250 à 500 °C du phosphate monosodique et/ou pyrophosphate disodique solide qui contient des quantités catalytiques d'acide orthophosphorique, d'acide polyphosphorique, d'acide phosphoreux ou d'acide hypophosphoreux, d'une façon statistiquement répartie.

2. Procédé suivant la revendication caractérisé en ce que la répartition statistique est obtenue par évaporation, séchage par pulvérisation ou séparation à l'état cristallin d'une solution commune des composants.

3. Procédé suivant l'une des revendications 1 et 2, caractérisé en ce que la réaction est effectuée à des températures de 280-380 °C.

4. Procédé suivant l'une des revendications 1 à 3, caractérisé en ce que la condensation est effectuée jusqu'à ce que l'on obtienne une matière solide sèche à des pressions partielles de vapeur d'eau de 0,067 à 0,6 bar (50-450 Torr).

5. Procédé suivant l'une des revendications 1 à 4, caractérisé en ce que l'acide constitue 0,05 à 10 moles %, de préférence 0,5 à 5 moles %, par rapport à la quantité totale.

6. Phosphate monosodique, contenant 0,05 à 2,5 moles % d'acide orthophosphorique statistiquement réparti dans le réseau cristallin.